(19) Europäisches Patentamt
European Patent Office
Office européen des brevets

(11) **EP 2 397 991 A1**

(12) **EUROPEAN PATENT APPLICATION**

(43) Date of publication:
**21.12.2011 Bulletin 2011/51**

(51) Int Cl.:
***G06T 11/00*** *(2006.01)*

(21) Application number: **11168587.1**

(22) Date of filing: **02.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **17.06.2010 KR 20100057660**

(71) Applicant: **Samsung Electronics Co., Ltd.
Yeoungtong-gu
Suwon-si, Gyeonggi-do (KR)**

(72) Inventors:
• **CHO, Young-hoon
Dongjak-gu, Seoul (KR)**
• **IM, Sang-kyun
Nowon-gu, Seoul (KR)**

(74) Representative: **Hewett, Jonathan Michael
Richard
Venner Shipley LLP
20 Little Britain
London EC1A 7DH (GB)**

(54) **Method for providing texture effect and display apparatus applying the same**

(57)    A method of providing a texture effect and a display apparatus applying the same are provided. The display apparatus includes: an image processor which generates a texture made up of brightness values and adds the texture to an image; and a display unit which displays the texture-added image. Accordingly, a user can express a texture of a canvas, paper, a brick, etc. on a displayed image without using an extra image editing program.

# FIG. 5A

**Description**

The present invention relates to a method for providing a texture effect and a display apparatus applying the same, and more particularly, to a method for providing a texture effect, which adds a texture effect to an image, and a display apparatus applying the same.

In recent years, a display apparatus has become able to support additional operations besides its original operation of displaying photos or images. A representative additional operation is a Non-Photorealistic Rendering (NPR) operation.

The NPR is an image processing technique that does not process a photo as is, but processes the photo non-realistically by applying diverse effects to the photo. In contrast to a realistic expression of an object, the NPR-processed expression exaggerates a trivial object or resolutely omits an unimportant object in order to highlight a subject. Such an NPR technique is widely used in gaming, animation, advertisements, movies, etc.

The NPR includes various methods to perform a non-realistic rendering process with respect to an input image. For example, the NPR includes a method of rendering a photo in a colored pencil drawing style, a pen drawing style, an oil painting style, a watercolor printing style, a cartoon style, and a sketch style.

Using such various NPR methods, a user is able to add diverse effects to an image without having an expert image editing ability. As such, the user may wish to add more diverse effects to the image using the NPR process.

One or more exemplary embodiments of the present invention provide a method of providing a texture effect, which generates texture having brightness values and adds the texture to an image, and a display apparatus applying the same. According to an aspect of the present invention, there is provided a display apparatus including: an image processor which generates a texture that is brightness values and adds the texture to an image; and a display unit which displays the texture-added image.

The display apparatus may further include: a storage unit which stores a patch that is a monochrome image of brightness values for pixels, and the image processor may generate the texture having a same definition as a definition of the display unit using the patch.

The image processor may generate the texture having the same definition as the definition of the display unit by arranging the patch repeatedly.

The image processor may generate the texture having the same definition as the definition of the display unit by enlarging or reducing the patch and arranging at least two of the original patch, the enlarged patch, and the reduced patch repeatedly.

The image processor may add the texture to a brightness component of the image.

The image processor may convert a first color space of the image into a second color space including a brightness component, add the texture to the brightness component of the image which has been converted into the second color space, and convert the texture-added image of the second color space into the first color space.

The first color space may be an RGB color space and the second color space may be a YCbCr color space, and the image processor may add the texture to a Y component of the image which has been converted into the YCbCr color space.

The display apparatus may further include a storage unit which stores a patch that is a monochrome image of brightness values for pixels, and the image processor may include: a first color space converter which converts the image from the first color space to the second color space, a texture generator which generates the texture using the patch, a texture application unit which adds the generated texture to the brightness component of the image which has been converted into the second color space, and a second color space converter which converts the image from the second color space to the first color space.

The image processor may calculate a brightness component of the image and add the texture to the calculated brightness component.

The image may be an image of an RGB color space, and the image processor may calculate a brightness component from an RGB component of the RGB color space, and add the texture to the calculated brightness component.

According to another aspect of the present invention, there is provided a method of providing a texture effect, the method including: generating a texture that is brightness values; adding the texture to an image; and displaying the texture-added image.

The method may further include storing a patch that is a monochrome image of brightness values for pixels, and the generating the texture may include generating the texture having a same definition as a definition of the display unit using the patch.

The generating the texture may include generating the texture having the same definition as the definition of the display unit by arranging the patch repeatedly.

The generating the texture may include generating the texture having the same definition as the definition of the display unit by enlarging or reducing the patch and arranging at least two of the original patch, the enlarged patch, and the reduced patch repeatedly.

The adding the texture may include adding the texture to a brightness component of the image.

The adding the texture may include: converting a first color space of the image into a second color space including a brightness component, adding the texture to the brightness component of the image which has been converted into the second color space, and converting the texture-added image of the second color space into the first color space.

The first color space may be an RGB color space and the second color space may be a YCbCr color space, and the adding the texture may include adding the texture to a Y component of the image which has been converted into the YCbCr color space.

The method may further include storing a patch that is a monochrome image of brightness values for pixels, the generating the texture may include generating the texture using the patch, and the adding the texture may include: converting the image from the first color space into the second color space, adding the generated texture to the brightness component of the image which has been converted into the second color space, and converting the image from the second color space to the first color space.

The adding the texture may include calculating a brightness component of the image and adding the texture to the calculated brightness component.

The image may be an image of an RGB color space, and the adding the texture may include calculating a brightness component from an RGB component of the RGB color space, and adding the texture to the calculated brightness component.

According to another aspect of the present invention, there is provided a method of providing a texture effect to an image, the method including: generating a texture that is brightness values; adding the texture to the image; and outputting the texture-added image to be displayed.

According to one or more exemplary embodiments described above, a method of providing a texture effect, which generates a texture that is brightness values and adds the texture to an image, and a display apparatus applying the same are provided, so that a user can express a texture of a canvas, paper, a brick, etc., on a displayed image without using an extra image editing program.

Additional aspects and advantages will be set forth in the detailed description, will be obvious from the detailed description, or may be learned by practicing the exemplary embodiments.

The above and/or other aspects will be more apparent by describing in detail exemplary embodiments with reference to the accompanying drawings in which:

FIG. 1 is a block diagram illustrating a digital photo frame according to an exemplary embodiment;

FIG. 2 is a block diagram illustrating an image processor according to an exemplary embodiment;

FIG. 3 is a flowchart illustrating a method of providing a texture effect, which converts a color space of an image and adds texture to the image, according to an exemplary embodiment;

FIG. 4 is a flowchart illustrating a method of providing a texture effect, which adds texture without converting a color space of an image, according to another exemplary embodiment; and

FIGs. 5A to 5E are views illustrating various methods of generating texture using a patch, according to one or more exemplary embodiments.

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail. Hereinafter, expressions such as "at least one of," when preceding a list of elements, modify the entire list of elements and do not modify the individual elements of the list.

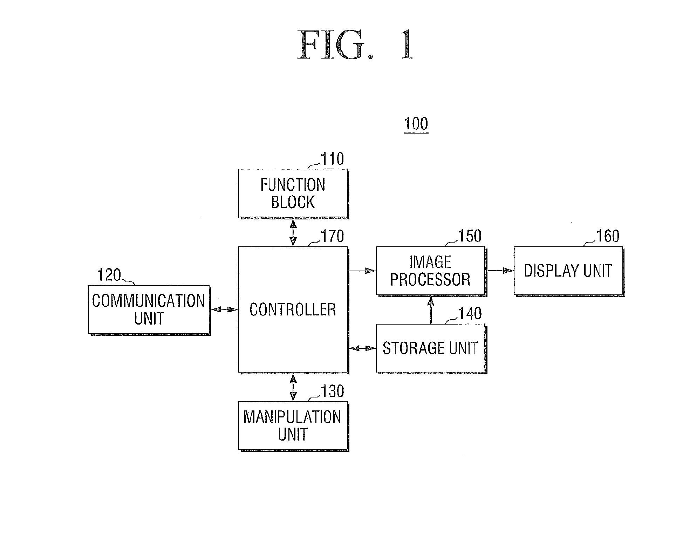

FIG. 1 is a block diagram illustrating a digital photo frame 100 according to an exemplary embodiment. Referring to FIG. 1, the digital photo frame 100 includes an operation block 110, a communication unit 120, a manipulation unit 130, a storage unit 140, an image processor 150, a display unit 160, and a controller 170.

The operation block 110 performs a first operation of the digital photo frame 100. For example, the operation block 110 may reproduce an image (such as a photo or a moving picture).

The communication unit 120 is communicably connected to an external apparatus, for example, through a mobile communication network or the Internet. The communication unit 120 may download image contents from the external apparatus.

The manipulation unit 130 receives a user's manipulation to input a user command. Specifically, the manipulation unit 130 receives a manipulation corresponding to a selecting command on diverse items displayed on a screen from a user. The manipulation unit 130 may be realized as at least one of a touch screen, a button, a mouse, a touch pad, a remote controller, a rotatable dial, etc.

The storage unit 140 stores programs and applications for performing the first operation of the digital photo frame 100. Also, the storage unit 140 may store image data.

Furthermore, the storage unit 140 may store diverse types of patches for generating texture. The patch is a monochrome image data of a specific size which includes brightness values for pixels (e.g., image data including only a brightness component). The patch may be smaller than a definition of a display screen or may be greater than or equal to the definition of the display screen. For example, the patch has a small-sized texture component to form a base shape of texture. The storage unit 140 may store the patch in a compressed format.

The image processor 150 image-processes input image data and outputs the image-processed image data to the display unit 160. The image processor 150 may perform a Non-Photorealistic Rendering (NPR) process in order to express a texture effect with respect to the input image.

The input image may include an image signal or image data input from an external source or an image signal or image data input to the image processor 150 from the storage unit 140.

The texture effect is an image processing technique that expresses a specific surface of an image as if the specific surface has textures. For example, the texture effect can express a texture of canvas, paper, or brick on a surface of an image.

The image processor 150 generates texture including brightness values. The image processor 150 adds the texture to an input image. Accordingly, the texture effect is given to the entire image so that the image is expressed as if the image has a specific texture. Also, by adding the texture effect to the image using the brightness values of the image, the image processor 150 can simply perform the texture processing and maximize the texture effect.

The image processor 150 selects and reads out one of diverse types of patches stored in the storage unit 140, and generates texture having the same definition as that of the display unit 160 using the selected patch. If the patch is stored in a compressed format, the image processor 150 decompresses the patch.

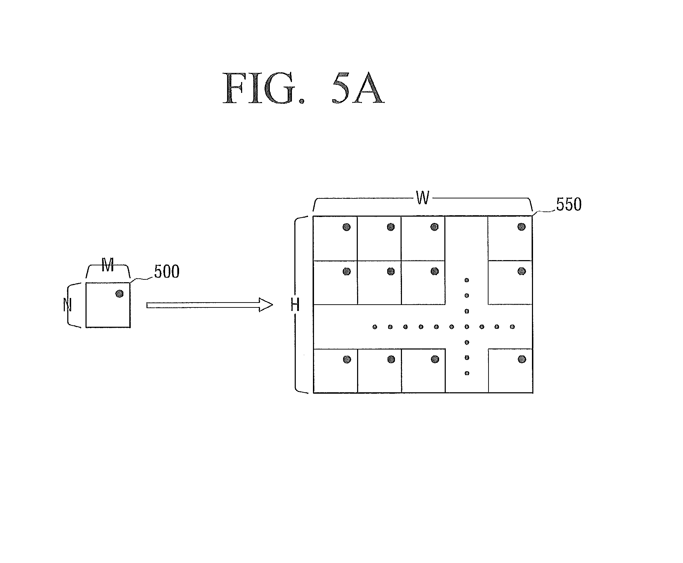

For example, the image processor 150 generates texture having the same definition as that of the display unit 160 by arranging the patch repeatedly. Also, the image processor 150 may generate texture having the same definition as that of the display unit 160 by arranging the patch, the shape of which is changed or which is rotated, repeatedly. The operation of the image processor 150 in generating the texture by arranging the patch repeatedly will be explained in detail hereinbelow with reference to FIGs. 5A to 5E.

FIGs. 5A to 5E are views illustrating various methods of generating texture using a patch according to one or more exemplary embodiments.

FIG. 5A is a view illustrating a method of generating a texture 550 by arranging a patch 500 as is. A shown in FIG. 5A, the patch 500 has a horizontal definition of M and a vertical definition N. The image processor 150 arranges the patch 500 repeatedly in a grid pattern, thereby generating the texture 550 having a horizontal definition of W and a vertical definition of H.

As described above, the image processor 150 may generate the texture 550 by arranging the patch 500 repeatedly.

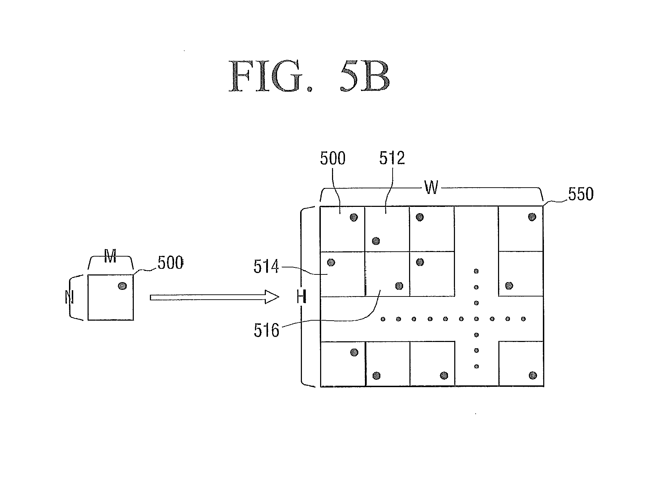

FIG. 5B is a view illustrating a method of generating a texture 550 by arranging a patch 500 repeatedly after rotating the patch 500. Referring to FIG. 5B, the texture 550 is formed by arranging the original patch 500, a patch 512 rotated by 180 degrees in the counter clockwise direction, a patch 514 rotated by 90 degrees in the counter clockwise direction, a patch 516 rotated by 270 degrees in the counter clockwise direction, and so on, repeatedly.

As described above, the image processor 150 may generate the texture 550 by arranging the patch 500 repeatedly after rotating the patch 500.

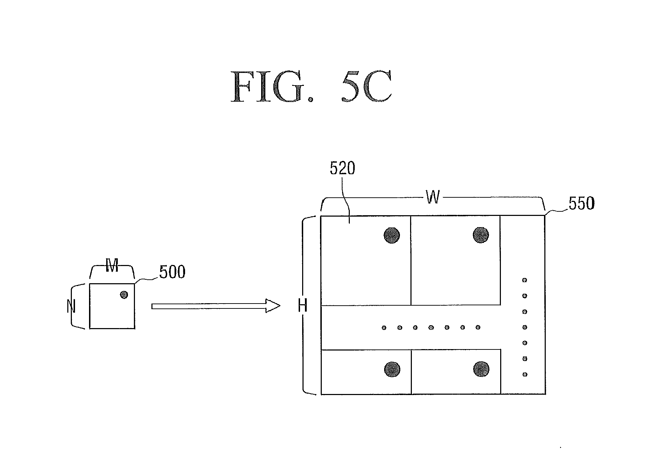

FIG. 5C is a view illustrating a method of generating a texture 550 by arranging a patch 500 repeatedly after enlarging the patch 500. Referring to FIG. 5C, the texture 550 is formed by arranging a patch 520, which is enlarged twice in relation to the patch 500, repeatedly.

As described above, the image processor 150 may generate the texture 550 by arranging the patch 500 repeatedly after enlarging the patch 500.

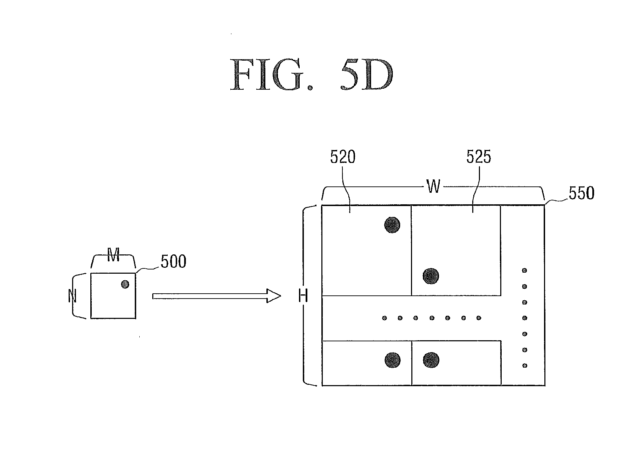

FIG. 5D is a view illustrating a method of generating a texture 550 by arranging a patch 500 repeatedly after enlarging and rotating the patch 500. Referring to FIG. 5D, the texture 550 is formed by arranging a patch 520 which is enlarged twice in relation to the patch 500, a patch 525 which is enlarged twice in relation to the patch 500 and rotated by 180 degrees in the counter clockwise direction, and so on.

As described above, the image processor 150 may generate the texture 550 by arranging the patch 500 repeatedly after enlarging and rotating the patch 500.

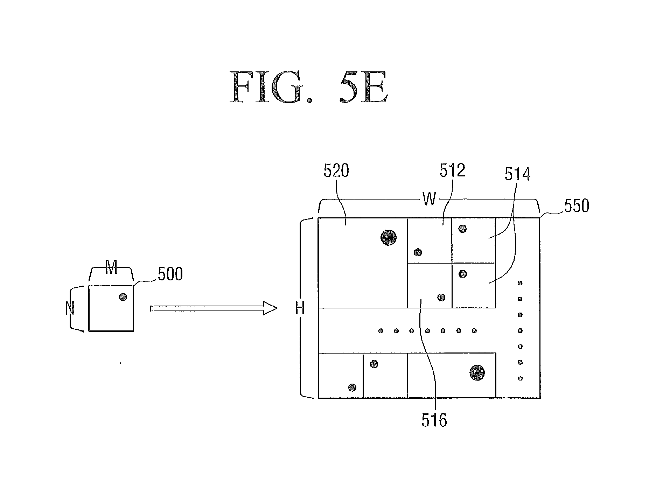

FIG. 5E is a view illustrating a method of generating a texture 550 by arranging a patch 500 repeatedly after at least one of enlarging and rotating the patch 500. Referring to FIG. 5E, the texture 550 is formed by arranging a patch 520 which is enlarged twice in relation to the patch 500, a patch 512 which is rotated by 180 degrees in the counter clockwise direction, a patch 514 which is rotated by 90 degrees in the counter clockwise direction, a patch 516 which is rotated by 270 degrees in the counter clockwise direction, and so on.

As described above, the image processor 150 generates the texture 550 by changing the patch 500 diversely and arranging the patch 500 repeatedly.

In the present exemplary embodiment, the image processor 150 generates the texture in the form of an image. However, it is understood that another exemplary embodiment is not limited thereto. For example, according to another exemplary embodiment, the image processor 150 may calculate only texture brightness value data corresponding to each coordinate of the input image without generating a texture image.

Also, while in the present exemplary embodiment the size of the patch is smaller than the definition of the image to be displayed, it is understood that another exemplary embodiment is not limited thereto. For example, according to another exemplary embodiment, the size of the patch may be greater than or equal to the definition of the image to be displayed. In this case, the image processor 150 uses the patch as texture without having to arrange the patch repeatedly.

Referring back to FIG. 1, the image processor 150 adds the generated texture to a brightness component of the input image. If the input image is represented in a first color space that does not include a brightness component, the image processor 150 converts the input image into a second color space that includes a brightness component.

In this case, the image processor 150 may convert the first color space of the image into the second color space including the brightness component, add texture to the brightness component of the second color space image, and convert the image of the second color space to which the texture is added into the first color space.

For example, the image processor 150 converts an image of an RGB color space into an YCbCr color space, adds texture that is a brightness component to a Y component of the YCbCr image, and converts the textured-added YCbCr image into the RGB color space image. It is understood that another exemplary embodiment is not limited to the above-described color spaces, and any color space that does not include a brightness component can be the first color space and any color space that includes a brightness component can be the second color space in other exemplary embodiments.

The image processor 150 may use the following exemplary Formula 1 when adding the texture to the Y component:

[Formula 1]

$$Y\_IMG(x,y) + \alpha(M\text{-}TEXTURE\_IMG(x,y)) = TEXTURED\_Y\_IMG(x,y),$$

where Y_IMG(x,y) is a Y component pixel value in (x,y) coordinates of an input image, TEXTURE_IMG(x,y) is a brightness value in (x,y) coordinates of a texture image, TEXTURED_Y_IMG(x,y) is a Y component pixel value in (x,y) coordinates of a texture-applied image, $\alpha$ is a weight value indicating a degree of texture, and M is an average brightness value of a texture image as an offset value.

In Formula 1, $\alpha$ and M may be adjustable by a user's manipulation. Accordingly, the user may adjust the degree of texture effect by adjusting $\alpha$ and M through a manipulation of the manipulation unit 130.

Subsequently, the image processor 150 converts the image into the RGB image again using the texture-applied Y component and Cb and Cr.

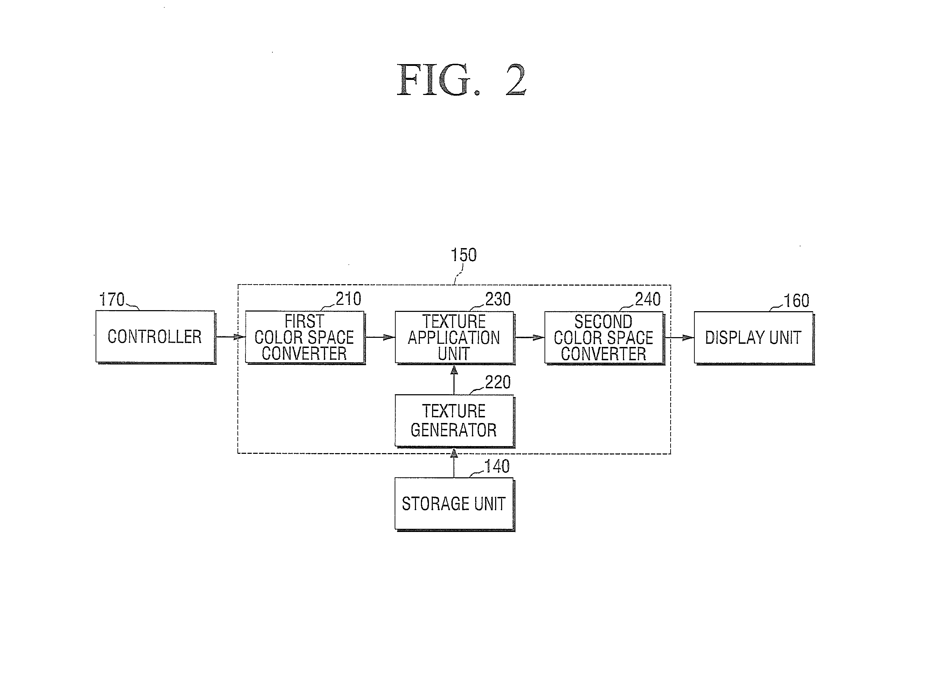

As described above, if the input image does not include a brightness component, the image processor 150 converts the color space of the input image into a color space that includes a brightness component and adds texture to the brightness component of the input image. In order to perform the above-described process, the image processor 150 may have a structure as shown in FIG. 2. A detailed structure of the image processor 150 according to an exemplary embodiment will be described below with reference to FIG. 2.

According to another exemplary embodiment, even if the input image is represented in a color space that does not include a brightness component, the image processor 150 may add the texture to the input image. For example, the image processor 150 may calculate a brightness component of the image using color coordinate values and may add the texture to the calculated brightness component.

For example, if the input image is an image of an RGB color space, the image processor 150 may calculate a brightness component from an RGB component of the RGB color space and add texture to the calculated brightness component.

Specifically, the image processor 150 may directly add the texture to color coordinate values of the RGB color space using the following exemplary Formula 2:

[Formula 2]

$$R'=R+(\alpha * Texture)$$

$$G'=G+(\beta * Texture)$$

$$B'=B+(\gamma * Texture),$$

where $\alpha$, $\beta$, $\gamma$ are arbitrary real numbers and indicate weight constants of each of R, G, B used for calculating brightness values of the RGB image.

As described above, by applying the texture without converting the color space, the image processor 150 can prevent image quality deterioration caused by the color space conversion.

Moreover, if the input image uses a color space that includes a brightness component, the image processor 150 may add the texture to the brightness component without extra conversion. For example, if a moving picture compressed in an MPEG format or a still image compressed in a JPEG format, which uses an YCbCr space, is input, the image processor 150 directly adds texture to the Y component of the input image.

As described above, the image processor 150 according to one or more exemplary embodiments can add the texture to the brightness component in various ways.

The display unit 160 displays the image that has been processed, by the image processor 150, to express the texture effect on a screen. The display unit 160 may display the image using a liquid crystal display (LCD), a plasma display panel (PDP), an active matrix organic light emitting diodes (AMOED), etc.

The controller 170 controls an overall operation of the digital photo frame 100 according to, for example, a user's manipulation input through the manipulation unit 130. Furthermore, the controller 170 controls the image processor 150 to perform the above-described operations.

Hereinafter, a detailed structure and operation of an image processor 150 according to an exemplary embodiment will be explained with reference to FIG. 2. FIG. 2 is a block diagram illustrating an image processor 150 according to an exemplary embodiment. By way of example, the structure of the image processor 150 of FIG. 2 is capable of adding texture to an input image which does not include a brightness component by converting a color space of the input image to a color space including a brightness component.

Referring to FIG. 2, the image processor 150 includes a first color space converter 210, a texture generator 220, a texture application unit 230, and a second color converter 240.

The first color converter 210 converts the input image from a first color space into a second color space. The first color space is a color space that does not include a brightness component (for example, an RGB color space). Also, the second color space is a color space that includes a brightness component. For example, if the input image is an image of an RGB color space, the first color space converter 210 converts the input image of the RGB color space into a YCbCr color space.

The texture generator 220 generates a texture that includes a brightness component (e.g., texture that includes only a brightness component). For example, the texture generator 220 selects and reads out one of at least one type of patch stored in a storage unit 140, and generates a texture having the same definition as that of a display unit 160 using the selected patch. If the patch is stored in a compressed format, the texture generator 220 decompresses the patch and reads out the patch.

The texture generator 220 may generate the texture having the same definition as that of the display unit 160 by arranging the patch repeatedly. Also, the texture generator 220 may generate the texture having the same definition as that of the display unit 160 by arranging the patch repeatedly after changing the shape of the patch or rotating the patch. Exemplary operations of generating the texture by arranging the patch by the texture generator 220 have been explained above with reference to FIGs. 5A to 5E.

The texture application unit 230 adds the generated texture to the brightness component of the image that has been converted into the second color space. For example, the texture application unit 230 may add the texture to a Y component of the image that has been converted into the YCbCr color space. The texture application unit 230 may add the texture using the above-described Formula 1.

The second color converter 240 converts the texture-added image from the second color space to the first color space. For example, the second color converter 240 may convert the texture-added YCbCr image into the image of the RGB color space.

If the input image does not include the brightness component, the image processor 150 having the above-described structure can add the texture to the brightness component of the input image by converting the color space of the input image into the color space including the brightness component.

As described above, the image processor 150 adds the texture to the entire area of an image using the brightness component, thereby expressing the texture.

As described above, the digital photo frame 100 adds the texture including the brightness component to the image, thereby giving the texture effect to the image without using an extra image editing program. Therefore, the user can easily add a texture of, for example, a canvas, paper, or a brick to a desired image without using an extra device.

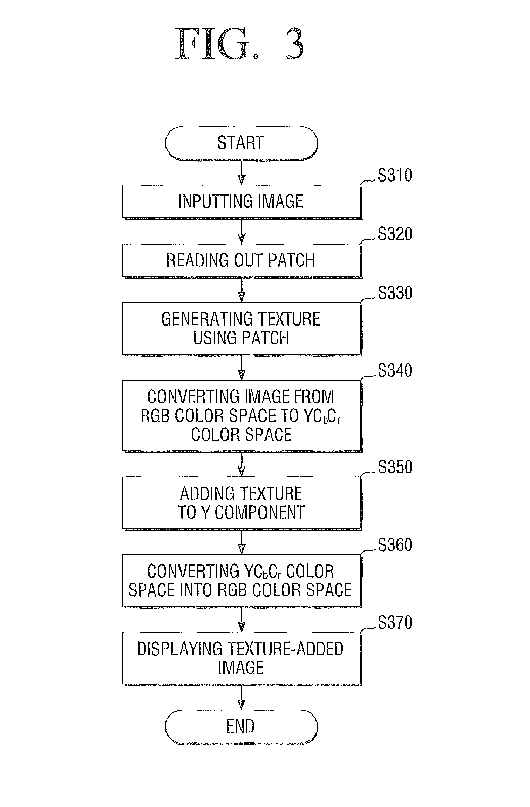

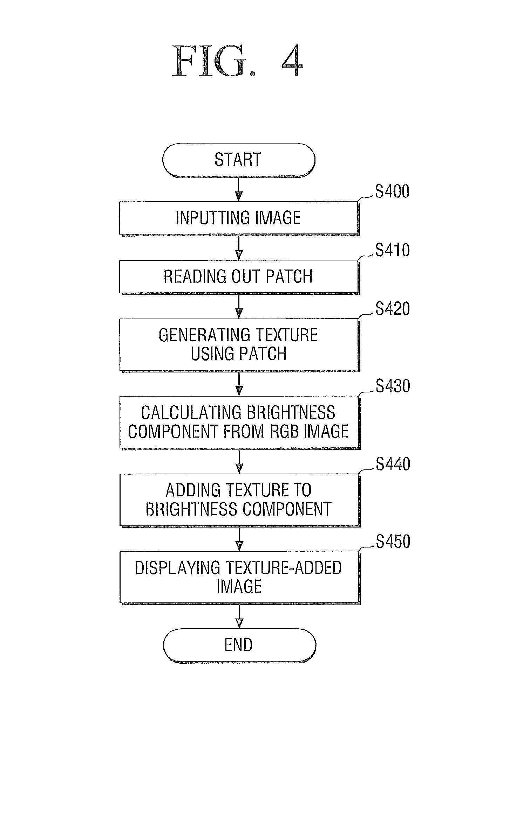

Hereinafter, a method of providing a texture effect according to an exemplary embodiment will be explained with reference to FIGs. 3 and 4. FIG. 3 is a flowchart illustrating a method of providing a texture effect, which converts a color space of an image and adds texture, according to an exemplary embodiment.

Referring to FIG. 3, an image processing device (e.g., a digital photo frame 100) receives an image (operation S310). By way of example, the input image may be an image signal or image data input from an external source or an image signal or image data input from a storage medium embedded in the image processing device. The image processing device (e.g., a digital photo frame 100) selects and reads out one of at least one type of patch stored in the storage unit 140 (operation S320). The image processing device generates a texture having the same definition as that of a display unit 160 using the selected patch (S330). If the patch is stored in a compressed format, the image processing device decompresses the patch and reads out the patch.

For example, the image processing device may generate the texture having the same definition as that of the display unit 160 by arranging the patch repeatedly. Furthermore, the image processing device may generate the texture having the same definition as that of the display unit 160 by arranging the patch repeatedly after at least one of changing the shape of the patch or rotating the patch. Exemplary operations of generating the texture by arranging the patch repeatedly have been described above with reference to FIGs. 5A to 5E.

In the present exemplary embodiment, the image processing device generates the texture in the form of an image. However, it is understood that another exemplary embodiment is not limited thereto. For example, according to another exemplary embodiment, the image processing device may calculate only texture brightness value data corresponding to each coordinate of the input image without generating a texture image.

Also, while in the present exemplary embodiment, the size of the patch is smaller than the definition of the image to be displayed, it is understood that the size of the patch may be greater than or equal to the definition of the image to be displayed in one or more other exemplary embodiments. In this case, the digital photo frame 100 can use the patch as the texture without having to arrange the patch repeatedly.

The image processing device converts the image from a first color space (e.g., RGB color space) to a second color space (e.g., YCbCr color space) (operation S340). The image processing device adds the texture including the brightness component to a Y component of the YCbCr image (operation S350). The image processing device may use the above-described Formula 1 when adding the texture to the Y component. Subsequently, the image processing device converts the texture-added YCbCr image into the image of the RGB color space (operation S360).

The image processing device outputs the textured-added image to be displayed (operation S370).

As described above, if the input image does not include the brightness component, the image processing device converts the color space of the input image into the color space including the brightness component, so that the texture can be added to the brightness component of the input image.

Furthermore, an image processing device according to an exemplary embodiment may add the texture without converting the color space, which will be explained with reference to FIG. 4. FIG. 4 is a flowchart illustrating a method of providing a texture effect, which adds texture without converting a color space of an image, according to another exemplary embodiment.

Referring to FIG. 4, the image processing device (e.g., a digital photo frame 100) receives an image (operation S400). The input image may be an image signal or image data input from an external source or an image signal or image data input from a storage medium embedded in the image processing device.

The image processing device selects and reads out one of at least one type of patch stored in a storage unit 140 (operation S410). The image processing device generates a texture having the same definition as that of a display unit 160 using the selected patch (operation S420). If the patch is stored in a compressed format, the image processing device decompresses the patch and reads out the patch.

By way of example, the image processing device generates the texture having the same definition as that of the display unit 160 by arranging the patch repeatedly. Furthermore, the digital photo frame 100 may generate the texture having the same definition as that of the display unit 160 by arranging the patch repeatedly after at least one of changing the shape of the patch or rotating the patch. Exemplary operations of generating the texture by arranging the patch repeatedly have been described above with reference to FIGs. 5A to 5E.

In the present exemplary embodiment, the image processing device generates the texture in the form of an image. However, it is understood that another exemplary embodiment is not limited thereto. For example, according to another exemplary embodiment, the image processing device may calculate only texture brightness value data corresponding to each coordinate of an input image without generating a texture image.

Also, while in the present exemplary embodiment, the size of the patch is smaller than the definition of the image to be displayed, the size of the patch may be greater than or equal to the definition of the image to be displayed in other exemplary embodiments. In this case, the digital photo frame 100 may use the patch as the texture without having to arrange the patch repeatedly.

The image processing device calculates a brightness component from the first color space (e.g., RGB) image (operation S430). The image processing device adds the texture to the calculated brightness component (operation S440). For example, the image processing device directly adds the texture to color coordinate values of the RGB color space using the above-described Formula 2.

The image processing device outputs the texture-added image to be displayed (S450).

By applying the texture without converting the color space as described above, the image processing device can prevent image quality deterioration caused by the color space conversion. The image processing device can add the texture to the entire area of the image using the brightness component, thereby expressing the texture.

As described above, by adding a texture that is the brightness component to an image, an image processing device (e.g., a digital photo frame 100) can give the texture effect to the image without using an extra image editing program. Therefore, the user can easily add, for example, a texture of a canvas, paper, or a brick to a desired image without using an extra device.

The image processing device may, although not necessarily, store both the texture-added image and the image to which the texture effect is not applied.

In the above-described exemplary embodiments, the digital photo frame 100 has been described as a display apparatus for convenience of explanation. However, another exemplary embodiment is not limited thereto, and may be applied to any image processing apparatus that performs an NPR process with respect to an input image and displays the image. For example, the image processing apparatus may be a digital camera, a camcorder, a portable multimedia player (PMP), an MP3 player, a mobile phone, a laptop computer, a personal digital assistant (PDA), etc.

While not restricted thereto, an exemplary embodiment can also be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as one or more computer programs transmitted over a computer-readable transmission medium, such as a carrier wave, and received and implemented in general-use or special-purpose digital computers that execute the programs. Moreover, while not required in all exemplary embodiments, one or more units of the above-described apparatuses and devices can include a processor or microprocessor executing a computer program stored in a computer-readable medium, such as a local storage.

The foregoing exemplary embodiments are merely exemplary and are not to be construed as limiting the present inventive concept. The present teaching can be readily applied to other types of apparatuses. Also, the description of the exemplary embodiments is intended to be illustrative, and not to limit the scope of the claims, and many alternatives, modifications, and variations will be apparent to those skilled in the art.

**Claims**

1. A display apparatus comprising:

   an image processor which generates a texture made up of brightness values and adds the texture to an image; and
   a display unit which displays the texture-added image.

2. The display apparatus as claimed in claim 1, further comprising a storage unit which stores a patch which is a monochrome image of a specific size which is made up of brightness values for pixels,
   wherein the image processor generates texture having a same definition as a definition of the display unit using the patch.

3. The display apparatus as claimed in claim 2, wherein the image processor generates the texture having the same definition as the definition of the display unit by arranging the patch repeatedly.

4. The display apparatus as claimed in claim 2, wherein the image processor generates the texture having the same definition as the definition of the display unit by enlarging or reducing the patch and arranging at least two of the original patch, the enlarged patch, and the reduced patch repeatedly.

5. The display apparatus as claimed in any one of claims 1 to 4, wherein the image processor adds the texture to a brightness component of the image.

6. The display apparatus as claimed in claim 5, wherein the image processor converts a first color space of the image into a second color space including a brightness component, adds the texture to the brightness component of the image which has been converted into the second color space, and converts the texture-added image of the second color space into the first color space.

7. The display apparatus as claimed in claim 6, wherein the first color space is an RGB color space and the second color space is a YCbCr color space,
wherein the image processor adds the texture to a Y component of the image which has been converted into the YCbCr color space.

8. The display apparatus as claimed in claim 5, further comprising a storage unit which stores a patch which is a monochrome image of a specific size which is made up of brightness values for pixels,
wherein the image processor comprises:

   a first color space converter which converts the image from a first color space to a second color space including a brightness component;
   a texture generator which generates the texture using the patch;
   a texture application unit which adds the generated texture to the brightness component of the image which has been converted into the second color space; and
   a second color space converter which converts the image from the second color space to the first color space.

9. The display apparatus as claimed in claim 5, wherein the image processor calculates a brightness component of the image and adds the texture to the calculated brightness component.

10. The display apparatus as claimed in claim 9, wherein the image is an image of an RGB color space,
wherein the image processor calculates the brightness component from an RGB component of the RGB color space, and adds the texture to the calculated brightness component.

11. A method for providing a texture effect, the method comprising:

   generating a texture made up of brightness values;
   adding the texture to an image; and
   displaying the texture-added image.

12. The method as claimed in claim 11, further comprising storing a patch which is a monochrome image of a specific size which is made up of brightness values for pixels,
wherein the generating the texture comprises generating texture having a same definition as a definition of the display unit using the patch.

13. The method as claimed in claim 12, wherein the generating the texture comprises generating the texture having the same definition as the definition of the display unit by arranging the patch repeatedly.

14. The method as claimed in claim 12, wherein the generating the texture comprises generating the texture having the same definition as the definition of the display unit by enlarging or reducing the patch and arranging at least two of the original patch, the enlarged patch, and the reduced patch repeatedly.

15. The method as claimed in any one of claims 11 to 14, wherein the adding the texture comprises adding the texture to a brightness component of the image.

# FIG. 1

100

110
FUNCTION
BLOCK

170

120
COMMUNICATION
UNIT

CONTROLLER

150
IMAGE
PROCESSOR

160
DISPLAY UNIT

140
STORAGE UNIT

130
MANIPULATION
UNIT

# FIG. 2

CONTROLLER 170

150

FIRST COLOR SPACE CONVERTER 210

TEXTURE APPLICATION UNIT 230

TEXTURE GENERATOR 220

SECOND COLOR SPACE CONVERTER 240

DISPLAY UNIT 160

STORAGE UNIT 140

# FIG. 3

```
                    ┌──────────────┐
                    │    START     │
                    └──────┬───────┘
                           │                      S310
                    ┌──────▼───────┐
                    │ INPUTTING IMAGE │
                    └──────┬───────┘
                           │                      S320
                    ┌──────▼───────┐
                    │ READING OUT PATCH │
                    └──────┬───────┘
                           │                      S330
                    ┌──────▼───────┐
                    │ GENERATING TEXTURE │
                    │   USING PATCH     │
                    └──────┬───────┘
                           │                      S340
                    ┌──────▼───────┐
                    │ CONVERTING IMAGE FROM │
                    │ RGB COLOR SPACE TO YCbCr │
                    │    COLOR SPACE    │
                    └──────┬───────┘
                           │                      S350
                    ┌──────▼───────┐
                    │  ADDING TEXTURE  │
                    │  TO Y COMPONENT  │
                    └──────┬───────┘
                           │                      S360
                    ┌──────▼───────┐
                    │ CONVERTING YCbCr COLOR │
                    │ SPACE INTO RGB COLOR SPACE │
                    └──────┬───────┘
                           │                      S370
                    ┌──────▼───────┐
                    │ DISPLAYING TEXTURE-ADDED │
                    │      IMAGE       │
                    └──────┬───────┘
                           │
                    ┌──────▼───────┐
                    │     END      │
                    └──────────────┘
```

# FIG. 4

```
                    START

                       │               S400
          ┌────────────▼────────────┐
          │      INPUTTING IMAGE     │
          └────────────┬────────────┘
                       │               S410
          ┌────────────▼────────────┐
          │    READING OUT PATCH     │
          └────────────┬────────────┘
                       │               S420
          ┌────────────▼────────────┐
          │    GENERATING TEXTURE    │
          │       USING PATCH        │
          └────────────┬────────────┘
                       │               S430
          ┌────────────▼────────────┐
          │  CALCULATING BRIGHTNESS  │
          │ COMPONENT FROM RGB IMAGE │
          └────────────┬────────────┘
                       │               S440
          ┌────────────▼────────────┐
          │    ADDING TEXTURE TO     │
          │   BRIGHTNESS COMPONENT   │
          └────────────┬────────────┘
                       │               S450
          ┌────────────▼────────────┐
          │  DISPLAYING TEXTURE-ADDED│
          │          IMAGE           │
          └────────────┬────────────┘
                       │
                     END
```

# FIG. 5A

# FIG. 5B

# FIG. 5C

# FIG. 5D

# FIG. 5E

Europäisches
Patentamt

European
Patent Office

Office européen
des brevets

## EUROPEAN SEARCH REPORT

Application Number

EP 11 16 8587

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HERTZMANN A ET AL: "IMAGE ANALOGIES", COMPUTER GRAPHICS. SIGGRAPH 2001. CONFERENCE PROCEEDINGS. LOS ANGELES, CA, AUG. 12 - 17, 2001; [COMPUTER GRAPHICS PROCEEDINGS. SIGGRAPH], NEW YORK, NY : ACM, US, 12 August 2001 (2001-08-12), pages 327-340, XP001049902, ISBN: 978-1-58113-374-5 | 1,2, 5-12,15 | INV. G06T11/00 |
| Y | * figures 3-16 * <br> * sections 3.3, 4.5 * <br> * page 333, left-hand column, paragraph 1 * | 3,4,13, 14 | |
| X | ----- <br> YING TANG ET AL: "Natural Textures for Weather Data Visualization", INFORMATION VISUALIZATION, 2006 LONDON, ENGLAND 05-07 JULY 2006, PISCATAWAY, NJ, USA,IEEE, 5 July 2006 (2006-07-05), pages 741-750, XP010927204, DOI: 10.1109/IV.2006.77 ISBN: 978-0-7695-2602-7 * figures 1,2,4 * * section 4.1.2 * <br> ----- <br> -/-- | 1,11 | |

TECHNICAL FIELDS
SEARCHED      (IPC)

G06T

The present search report has been drawn up for all claims

| Place of search | Date of completion of the search | Examiner |
|---|---|---|
| Munich | 8 September 2011 | Scholz, Volker |

EPO FORM 1503 03.82 (P04C01)

Europäisches
Patentamt

European
Patent Office

Office européen
des brevets

# EUROPEAN SEARCH REPORT

Application Number

EP 11 16 8587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FANG ET AL.: "Textureshop: texture synthesis as a photograph editing tool", ACM TRANS. GRAPH., vol. 23, no. 3, 1 January 2004 (2004-01-01), pages 354-359, XP040007767, NEW YORK USA DOI: http://doi.acm.org/10.1145/1015706.1015728 * abstract * * figure 9 * * p. 358 section "Normal Transfer (Embossing)" * | 1,11 | |
| Y | US 2002/122043 A1 (FREEMAN WILLIAM T [US] ET AL) 5 September 2002 (2002-09-05) * abstract * * figures 1-15 * * section 3 * | 3,13 | |
| Y | "2.4 Image Mosaics" In: Strothotte et al.: "Non-photorealistic Computer Graphics", 1 January 2002 (2002-01-01), Morgan Kaufmann Publishers, USA, XP000002658305, ISBN: 1-55860-787-0 pages 72-81, * page 74, paragraphs 2,6 * | 4,14 | TECHNICAL FIELDS SEARCHED (IPC) |
| A | US 2009/214110 A1 (SON BYUNG-JUN [KR] ET AL) 27 August 2009 (2009-08-27) * the whole document * | 1-15 | |
| A | EP 0 961 230 A2 (CANON KK [JP]) 1 December 1999 (1999-12-01) * the whole document * | 1-15 | |

The present search report has been drawn up for all claims

| Place of search | Date of completion of the search | Examiner |
|---|---|---|
| Munich | 8 September 2011 | Scholz, Volker |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 11 16 8587

This annex lists the patent family members relating to the patent documents cited in the above-mentioned European search report.
The members are as contained in the European Patent Office EDP file on
The European Patent Office is in no way liable for these particulars which are merely given for the purpose of information.

08-09-2011

| Patent document cited in search report | | Publication date | Patent family member(s) | | Publication date |
|---|---|---|---|---|---|
| US 2002122043 | A1 | 05-09-2002 | NONE | | |
| US 2009214110 | A1 | 27-08-2009 | KR 20090092035 | A | 31-08-2009 |
| EP 0961230 | A2 | 01-12-1999 | US 6556210 | B1 | 29-04-2003 |

EPO FORM P0459